# EUROPEAN PATENT APPLICATION

(11) **EP 4 378 897 A1**
(43) Date of publication of application: **05.06.2024**
(21) Application number: 23212897.5
(22) Date of filing: 29.11.2023
(51) Int. Cl.: C02F 1/00, E04H 4/12, C02F 1/66, C02F 1/76, C02F 103/42

(54) **METHOD AND PLANT FOR POOL WATER TREATMENT**

(30) Priority: 30.11.2022 IT 202200024705
(71) Applicant: Pangenius S.r.l., 35127 Padova PD (IT)
(72) Inventor: PAGNIN, Massimiliano, 35127 Padova PD (IT)
(74) Representative: Manfrin, Marta

(57) **Abstract**

A water purification plant (1) connectable to a basin (2) of one or more swimming pools in order to purify the water contained therein, comprising a recirculation pump (3), water purification means (5), monitoring means (6) for detecting chemical and/or physical parameters of the water and comprising a turbidity sensor (7), and a control unit (8) for regulating the actuation and operating regime of the recirculation pump (3) depending on the data detected by the monitoring means, wherein a pre-filter (4) comprising a pre-filter tank and a pre-filter lid (4b) for insertion of one or more sensors is installed upstream of the pump (3), wherein said turbidity sensor (7) is installed inside the pre-filter tank through the pre-filter lid (4b).

## Description

### TECHNICAL SECTOR

The present disclosure relates to a plant and a method for the treatment of the water circulating from and into a swimming pool and configured to optimize the purification of the water and in particular to control the start-up and flow rate of the recirculating pump of a swimming pool by monitoring the turbidity of the swimming pool water so as to start purification of the water when necessary, optimizing the energy consumption and use of purification substances.

### BACKGROUND OF THE INVENTION

The present invention concerns a plant and method for treatment of the water in a swimming pool.

Today it is known that a correct management of the water in a swimming pool requires the monitoring of various parameters, including the variation in the liquid level, the circulation of the water and verification of the concentration of contaminants in the pool introduced by the bathers and external agents, such as atmospheric agents.

The circulation and filtration systems used in the conventional water supply systems of swimming pools may be employed in order to maintain a constant water level in the basin of the swimming pool, ensure the recirculation of the water between a balancing tank and the swimming pool basin, eliminate the contaminants by means of one more filters, and add chemical substances, such as chlorine or acids, in order to keep, for example, the pH of the water within an optimum range of values aimed at providing a suitable biocidal effect on undesirable microorganisms and bacteria, while ensuring comfortable use of the swimming pool by users.

Generally, said conventional systems comprise a recirculation pump connected to first discharge skimmers of the basin of a swimming pool and able to be activated so as to force a water flow, drawn off from the swimming pool, towards a filtering apparatus (e.g. quartz grain filter), and to convey finally the purified water back into the swimming pool basin through second, inlet, skimmers.

Conventionally a balancing tank may be provided for controlling the liquid level in the swimming pool basin, located between the swimming pool basin, upstream of the recirculation pump, and configured to receive the excess liquid from the basin when an overflow occurs, typically in spillover pools, and to convey the water back into the pool, by means of activation of the recirculation pump, so as to keep the water level above a predetermined level.

It is known that there exist standards which stipulate, for sanitary/hygiene reasons, checking of the quality of swimming pool water by means of monitoring of various chemical/physical parameters of the water such as the temperature, pH, turbidity, presence of suspended solids, colour of the water, free active chlorine, combined chlorine, cyanuric acid level, nitrates level, bacterial and organic substances count. The conventional water circulation systems of a swimming pool usually comprise a plurality of sensors and probes (e.g. nephelometric probes for measuring the turbidity) which monitor the aforementioned parameters and allow an external operator to check the hygiene level of the water and initiate suitable filtration cycles used in the water circulation system.

The concentration of the contaminants is conventionally controlled using filtering apparatus which are generally located downstream of the recirculation pump and which separate the contaminants from the liquid. The water of the swimming pool transporting particles, solids and debris is made to pass through said filtering apparatus while it is being recirculated. The filtering equipment removes most of the contamination from the water and returns the clean water to the swimming pool.

The clarity of the recycled water is generally an indication of its cleanliness. The clarity of the water may be determined objectively by measuring the "turbidity" of the water, namely by quantifying the degree to which the light passing through a liquid volume is diffracted by any particles suspended in the water.

The current systems for monitoring the quality of the water and recirculating the water, however, have a substantial drawback in that they require constant attention by an operator who, depending on past experience and the parameters detected by the sensors, regulates the action of the circulation system so as to bring the chemical/physical values back to within the acceptable levels stipulated by the standards. Therefore, especially the detection of the turbidity of the water is, in conventional plants, not very reliable and often does not enable the operator to define the settings of the purification system.

This frequently results in operation of the purification system which is often not optimal, namely where the purification action may be performed by overestimating the degree of contamination of the water or the impurities contained in it or, vice versa, by underestimating it such that the water in the swimming pool equipped with the purification system may correspond to the desired degree of purity or may contain excessive purification substances, respectively.

In addition, the same standards envisage that the water should be subject to filtration and purification cycles at regular intervals for the entire duration of operation of the swimming pool, irrespective as to the quality of the water adjusted during the period of operation or season (winter/summer).

This results in sub-optimal control of the energy consumption for operation of the recirculation and filtration plant and of the water consumption, and unjustified wear of the system components.

### SUMMARY OF THE INVENTION

The problem underlying the present invention is therefore that of overcoming the drawbacks of the prior art.

In particular, the problem underlying the present invention is that of allowing optimization of the energy consumption and use of purifying substances, as well as the use of mechanical filters, resulting in purification of the water in a swimming pool which is constantly in proportion to the degree of any contamination of said water, in a simple and easily realizable manner.

In particular, the task of the present invention is to provide a plant and a method for treatment of the water which allows more precise detection of parameters indicating contamination of the water than the conventional systems.

In connection with this task, one object of the present invention is to provide a plant and a method for treatment of the water in a swimming pool which allows automatic control of suitable cycles for filtration and/or purification of the said water, only when the values of one or more parameters indicating a possible degree of contamination of the water fall within predefined ranges.

In particular, another object of a treatment plant and method according to the present invention is that of allowing fine adjustment of the water purification activity, especially allowing the purification activity to be correlated to the possible degree of contamination.

A further object of the treatment plant and method according to the present invention is to provide for regulation of the treated water flow rate, during use, which depends on one or more parameters indicating a degree of contamination of the said water.

### BRIEF DESCRIPTION OF THE DRAWINGS

Further characteristic features and advantages of the present invention will become clear from the following detailed description of some non-limiting examples of embodiment provided with reference to the attached drawings, in which:

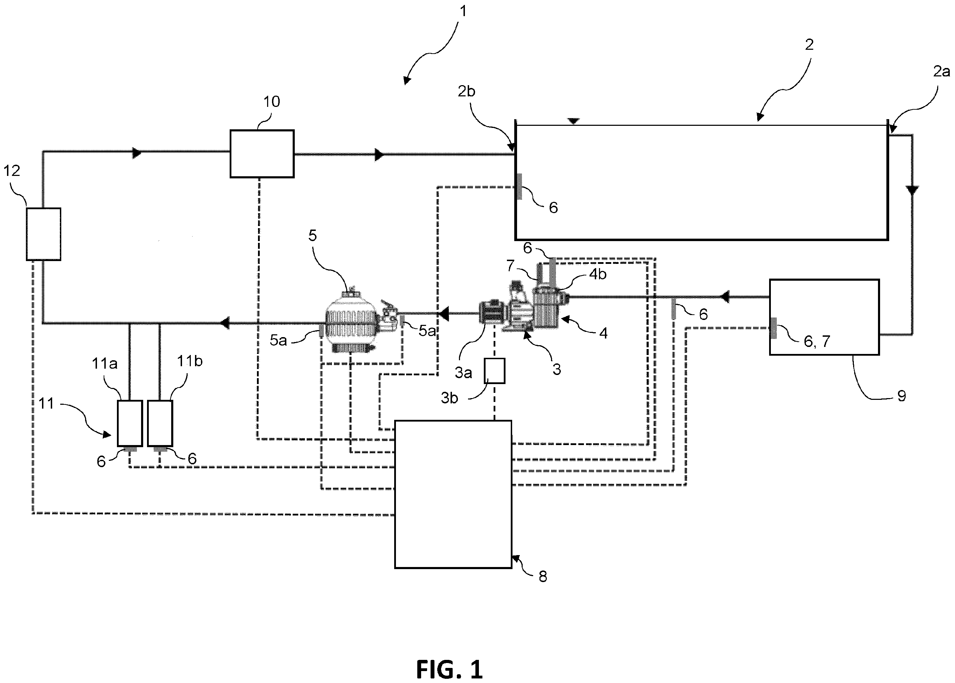

Figure 1 is a schematic view of a plant for the treatment of the water in a swimming pool according to the present invention.

### DETAILED DESCRIPTION

A water treatment plant and method according to the present invention allows automated reading of the parameters recorded by the probes and sensors for checking the quality of the water and can allow activation of the purification/filtration cycles exclusively when actually needed, namely when the values of one or more parameters indicating possible contamination of the water fall(s) below a predetermined minimum acceptable value or outside of predefined value ranges.

In the present description reference will be made to threshold values, for said parameters recorded by the water quality control probes and sensors, which are predefined and can be set by an external operator. For each parameter measured, said threshold values may be subject to variation depending on the national territory concerned. For example, in the case of the Italian national territory, the reference threshold values are established by the standard UNI 10637.

Otherwise, said threshold values may be established by different standards or set by an operator depending on the particular conditions for implementation of the present invention. In particular, a water treatment plant and/or method according to the present invention may be configured not only to regulate the activation of the recirculation pump when necessary, but also to regulate the operating regime thereof and consequently adjust the speed of the recirculation flow depending on the quality conditions of the water to be obtained. Said adjustment may be performed by means of feedback control of the parameters able to detect the quality of the water to be corrected and the chemical substances (e.g. chlorine, acids and bases) to be dispersed.

By determining an optimum filtration speed and continuous monitoring of the water quality and filtration cycles by means of a purification plant and method, in accordance with the present invention, it is therefore possible to obtain a substantial reduction from an energy and cost-related point of view compared to the costs for management of traditional plants.

A plant 1 for purifying a swimming pool water according to the present invention is shown in Figure 1 in schematic form and in a possible non-limiting example of embodiment thereof. The same plant 1 may be configured to manage and perform simultaneously purification of the water in several swimming pools, which may be situated close to each other and/or form part the same establishment. Here a plant 1 which can be connected to a basin 2 of a swimming pool in order to purify its water is disclosed, wherein the swimming pool comprises:
- at least one outlet skimmer 2a for allowing the water to flow out from said basin 2 and
- at least one inlet skimmer 2b for introducing the water into said basin 2.

The plant 1 comprises an intake line and a discharge line which can be connected respectively to said outlet skimmer 2a and to said inlet skimmer 2b in order to receive water from the basin 2 and introduce it back inside it.

The plant 1 may comprise at least one of the following:
- at least one recirculation pump 3, in fluid communication with said basin 2 and able to be operated with a variable regime and located between said outlet skimmer 2a and said inlet skimmer 2b for the water;
- in the case where at least one recirculation pump 3 is provided, at least one pre-filter 4 which is installed upstream of a respective recirculation pump 3 and which may be configured to remove debris, especially larger-size debris (e.g. hair. fluff, insects); preferably at least two pre-filters 4 may be installed upstream of each recirculation pump 3 and may be positioned hydraulically parallel with each other, where each pre-filter 4 may comprise a pre-filter tank 4a which may be provided with a pre-filter lid 4b which may also be configured to allow the insertion of one or more sensors inside the associated pre-filter tank 4a, 4b;
- in the case where at least one recirculation pump 3 is provided, the purification means 5 placed in fluid communication with said recirculation pump 3 for purifying water which has been forced through them by the recirculation pump 3; the purification means may be located downstream of said recirculation pump 3 and optionally upstream of said inlet skimmer 2b; for example, the purification means 5 may comprise at least one sand filter;
- monitoring means 6 able to detect chemical and/or physical parameters of the water flowing in said plant 1, said monitoring means 6 may comprise at least one water turbidity sensor 7 which, in turn, may comprise a nephelometric optical probe; the said monitoring means 6 may be installed in any point of the plant 1, but preferably are installed in a position thereof in which the turbulence effects of the water do not interfere with the detection of the presence, in the water, of impurities which they are intended to detect, as explained more fully below;
- at least one balancing tank 9, which is in fluid communication with said recirculation pump 3 and which may be located downstream of said outlet skimmer 2a and preferably upstream of said recirculation pump 3 and wherein, according to an embodiment of the present invention, said monitoring means 6 may be provided and especially said at least one turbidity sensor 7 may be installed in said tank; and
- where said recirculation pump 3 is provided, a control unit 8 is functionally connected to said recirculation pump 3, in order to adjust an operating regime thereof, and to said monitoring means 6, 7 in order to receive data therefrom.

The control unit 8 is configured to vary an operating regime of said recirculation pump 3 depending on the values measured by said monitoring means 6, where said measured values comprise at least one turbidity value of the water measured by said at least one turbidity sensor 7.

The control unit 8 may comprise:
- a memory device
- a receiver connected to the memory device and allowing data to be received from one or more of said monitoring means 6; and
- a processing circuit connected to the memory device and to the receiver.

The processing circuit may be configured to:
∘ receive a measurement of the turbidity of the water from said at least one turbidity sensor and, in the case of several turbidity sensors, to calculate a turbidity reference value which, for example, may be defined by an average of the turbidity values detected by the turbidity sensor 7;
∘ determine a fluid flowrate and a filtering time which are optimal for obtaining a desired turbidity level for the water in the basin 2 of said swimming pool, comparing a measured turbidity value of the water with a predefined desired turbidity value; and
∘ activating a variable-speed motor 3a, for example by means of a controller with inverter 3b, so as to start operation of at least one recirculation pump 3 at the optimum speed and time for filtration of the water.

The monitoring means 6 may include, as required, one or more of the following sensors:
- pH sensor
- water temperature sensor
- water hardness sensor
- water pressure sensor
- sensor for checking the percentage of oxygen in the water
- colorimetric sensor for the water
- a person-counting optical sensor, configured to determine the number of bathers present in said pool 2;
- a chlorine sensor configured to measure the quantity of chlorine present in the water
- a cyanuric acid sensor
- a further turbidity sensor 7
where at least one of the aforementioned sensors included in the monitoring means 6 listed may be inserted inside said pre-filter tank 4a of said recirculation pump 3 or inside said balancing tank 9 in order to limit or prevent interference caused by the movement of water with the readings of said sensors.

This is advantageous since the state and quality of the water present in the pre-filter tank 4a provide an indication of the quality of the water present in the swimming pool basin 2 since it has not yet undergone any type of filtration. Furthermore, the pre-filter tank 4a is such that the water inside it is substantially calm or, in other words, it is subject to negligible turbulence compared to the hydrodynamic turbulence which may be generated in other sections of the plant and especially inside the liquid connection pipes. The installation, in the pre-filter tank 4a, of the said at least one turbidity sensor 7 allows said sensor to have a greater accuracy as regards reading of the actual water turbidity level compared to the plants known in the present state of the art, where the turbidity sensor 7 and, generally, the monitoring means 6, 7 are installed along the water pipes. In fact, in the traditional solutions, the values measured by the monitoring means 6, 7 are subject to random reading errors due to the unpredictable turbulence of the running water.

Said pre-filter tank 4a of the recirculation pump 3 may comprise said lid for closing the pre-filter tank, the lid being provided with at least one housing configured for the insertion and the housing, inside the pre-filter tank 4a, of one or more sensors, in particular, but not exclusively, said turbidity sensor 7. This is advantageous since it allows easier removal of the sensor(s) from the pre-filter tank 4a during operations involving maintenance and cleaning of the pre-filter tank 4a, allowing an external operator to remove and clean or replace each sensor housed inside the pre-filter tank 4a by means of easy removal of the pre-filter lid 4b without the need for particular skills.

Two or more pre-filters may be installed upstream of the recirculation pump 3, preferably arranged parallel with each other, and each pre-filter 4 comprise a pre-filter tank 4a and a pre-filter lid 4b through which at least one turbidity sensor 7, and preferably another sensor forming part of the monitoring means 6, 7, can be inserted.

The presence of several pre-filters 4 arranged in parallel offers the triple advantage that more efficient preliminary filtration may be performed, and/or the period of use of each pre-filter 4 may be prolonged before maintenance is required, and/or a more accurate measurement of the turbidity of the water may be provided owing to the presence of several turbidity sensors since the values measured by each sensor may be read and averaged by the control unit 8.

A plant 1 according to the present invention, as described above, may furthermore comprise a balancing tank 9, inside which at least one turbidity sensor 7 may be inserted. Said balancing tank 9 is preferably installed at a lower level than the basin 2 of the swimming pool and is situated, along the purification plant 1, upstream of the recirculation pump 3 and downstream of said at least one outlet skimmer 2a of the swimming pool basin 2.

The function of the balancing tank 9 is to recover the water from the at least one outlet skimmer 2a and, in the case of overflow pools, the water resulting from suitable devices for collecting the water flowing over the edge of the swimming pool basin 2. Consequently, in the balancing tank 9 also, as in the pre-filter tank 4a described above, the state and the quality of the water present in it reflects that of the water present in the swimming pool basin 2. Furthermore, in the balancing tank 9, the water tends to be calm and subject to negligible turbulence compared to the outflow thereof through the liquid connection pipes. Consequently, the installation in the balancing tank 9 of said at least one turbidity sensor 7 is able to provide the advantage of obtaining a greater accuracy in the reading of the actual turbidity level of the water compared to a plant in which there is a turbidity sensor installed in a different section thereof. Advantageously, the presence of the balancing tank 9 is able to provide the advantage that a hydraulic damping action is obtained against any water hammer reactions which may for example occur upon start-up or stoppage of the recirculation pump 3. In fact, the balancing tank 9 may define an intermediate water storage tank between the swimming pool basin 2 and recirculation pump 3 itself and be configured and positioned with respect to the latter so as to dissipate the pressure peaks when the recirculation pump 3 is started and stopped. This reduces substantially the risk of breakage of the seals in the pipes connecting the basin 2 to the recirculation pump 3 as a result of the so-called "water hammer".

One or more further turbidity sensors may also be installed inside the balancing tank 9, as well as in the pre-filter tank 4a of each pre-filter 4 installed upstream of the recirculation pump 3. In this way it is possible to increase the accuracy of measurement of the water turbidity, since the turbidity of the water present in the balancing tank 9 may be compared and/or averaged with the value measured for the water present in the pre-filter tank 4a of each pre-filter 4 installed.

In order to increase the turbidity detection accuracy it is possible to install, in the balancing tank 9, further sensors forming part of the group of said monitoring means 6 listed above, including a further turbidity sensor 7.

The recirculation pump 3 is powered by a motor 3a and causes the water in the swimming pool and the balancing tank 9 to circulate via a system of water pipes from said at least one outlet skimmer 2a towards said at least one inlet skimmer 2b.

The motor 3a for powering the recirculation pump 3 may be configured to operate the recirculation pump 3 with a constant flow rate. In this case, the control unit 8 is configured to activate and deactivate selectively the motor 3a so as to maintain the quality of the swimming pool water detected depending on the values of said parameters indicating possible contamination of the water. Alternatively, the motor 3a may be configured to operate with a variable regime and so operate the recirculation pump 3 accordingly.

In this case, the control unit 8 is configured to operate the motor 3a in order to vary said flow rate depending on values of said indicative parameters, on the basis of which the processing circuit of the control unit 8 determines an optimum operating speed of the motor 3a and the recirculation pump 3 and a consequent volumetric flow rate of liquid to be circulated, the flow rate of the recirculation pump 3 being proportional to the speed of the motor 3a.

The recirculation pump 3 may be a centrifugal pump powered by an alternating current induction motor 3a controlled by means of an inverter 3b so as to be able to adjust the flow rate of the recirculation pump 3 between a minimum value and a maximum value.

Also the recirculation pump 3 may have installed, downstream thereof, at least one purification means 5, for example a filter, preferably a sand, quartz grain, cartridge or ceramic filter and/or any other type known per se in the present state of the art and suitable for filtering the water of a swimming pool.

Pressure sensors 5a, for example pressure gauges, may be installed on the entry and discharge side of the filter, said sensors being configured to measure the pressure difference of the water passing through the filter, said pressure difference being an indicator of the state of the filter, since a high pressure loss may be an indicator of saturation of the filter and the need to perform a filter cleaning cycle, for example reversing the direction of pumping of the recirculation pump 3 (using a method known per se as a backwashing cycle). Further similar or different filters may be installed in series with said filter 5. Each filter 5 may be provided with pressure sensors 5a on their entry and discharge sides so as to detect, in a similar manner to that described above, the state of saturation of the said filter 5.

Optionally, downstream of the filter 5, the water may pass through a heat exchange device 10, functioning in the manner described below, where the water may be heated or cooled to a desired temperature.

Downstream of the heat exchange device 10, the disinfection and the pH of the water supplying the swimming pool may be controlled and adjusted by a chlorine metering device 12 and a pH adjustment device 11 for maintaining the correct chemicals in the swimming pool water for example using the methods described below.

During the activity of the purification plant 1, according to the present invention, the water of the swimming pool, after being filtered, heated and disinfected, is then returned into the swimming pool basin 2 via said at least one inlet skimmer 2b.

The control unit 8, which is functionally connected to said turbidity sensor 7, reads the fluctuations in the clarity of the swimming pool water detected by said sensor and caused by variables including (but not limited thereto) the time of day, the conditions of the filter and the quantity of debris introduced into the pool. A nephelometric probe, type TU 8325, produced by B&C Electronics, may be used for example.

Depending on the reading of the turbidity sensor 7, the processing circuit of the control unit 8 may be programmed so as to operate the motor 3a of the recirculation pump 3 at variable speeds so that the flow rate of the pump may be kept within a minimum flow rate value and maximum flow rate value.

In accordance with the present invention, the operating mode of the recirculation pump 3 can be set by means of installation of a controller, preferably provided with an inverter 3b which, depending on the specific requirements of the recirculation pump 3 installed, activates it so as to obtain the desired operation.

The processing circuit of the control unit 8 may be configured to receive from said person-counting optical sensor a signal indicating the number of bathers present in the basin 2 of the swimming pool. The processing circuit may be configured to stop and/or prevent the activation of the recirculation pump 3, depending on the data measured by said optical sensor, for example when the number of bathers present in the basin 2 exceeds a given threshold value. Alternatively, the processing circuit may be configured to perform start-up of the recirculation pump 3 independently of the number of bathers present in the basin 2 and may be adjusted solely depending on the turbidity level measured as described above.

The measurement frequency of the turbidity sensor 7 may be set by the control unit 8 so as to perform continuous monitoring of the turbidity level, check the value read with a predefined threshold value and perform feedback control of the speed of the motor 3a and therefore of the flow rate of the recirculation pump 3 so as to lower the turbidity value below a predefined threshold value, for example < 2 mg/L SiO₂ (or 0.8 FTU).

Referring again to that already stated in the introduction, in the present description reference will be made to threshold values, relating to said parameters recorded by the water quality control probes and sensors, each threshold value being able to be set by an external operator, in compliance with the national standards for the national territory concerned. The values indicated in the present description are provided purely by way of example and reflect, for the Italian national territory, the reference threshold values established by the standards UNI 10637. This is not to be regarded as a limiting aspect, since said threshold values may be modified and re-defined depending on the national standards of any territory concerned.

For example, the control unit 8 may be set to perform switching-on of the motor 3a of the recirculation pump 3 at an intermediate speed X (where for example X = 600 rpm) if the turbidity value detected by the turbidity sensor 7 and read by the control unit 8 is greater than J (where for example J = 2 mg/L of SiO₂) but less than K (where for example K = 4 mg/L of SiO₂) so that the recirculation pump works at an intermediate flow rate.

If the turbidity were to exceed the value K, the motor 3a may be set to the maximum speed Y (for example Y = 2000 rpm) so that the flow rate of the pump is maximum.

If the turbidity level read returns within the range [J,K] ( [2.4] mg/L of SiO₂), the speed of the motor 3a may be reduced to the intermediate value Y so as not to overload the motor 3a and the recirculation pump 3 and optimize the energy consumption.

Therefore, instead of operating the recirculation pump 3 always at the maximum flow rate and power irrespective as to the actual load conditions, the control unit 8 may adjust the operation of the motor 3a, and therefore of the recirculation pump 3, depending on the actual load conditions. The continuous measurements of the turbidity help ensure that the filtering and clarity of the swimming pool water are kept at optimum values at all times, while variation of the flow rate of the recirculation pump 3 and the speed of the motor 3a reduces the energy which is used and the operating costs.

Consequently, a plant 1 according to the present invention, which allows variation of the flow rate of the recirculation pump 3 so as to take account of the actual load conditions, reduces substantially the energy consumption of the recirculation pump 3.

The plant 1 may furthermore comprise a heat exchange device 10, situated upstream of said inlet skimmer 2b and downstream of said purification means 5, and able to exchange heat with the water flowing in the plant 1 in order to heat it or cool it, and also may be functionally connected to said control unit 8, together with at least one temperature sensor which, during use, is passed over by the water flowing in the plant 1 or installed in the swimming pool served by the latter in order to detect the temperature of the water therein.

The processing circuit of the control unit 8 may be configured to set a predefined desired temperature level of the water, depending on the temperature of the water measured by said water temperature sensor as well as on the operating season (summer/winter) of the swimming pool plant 1. For example, a threshold temperature value (e.g. 24°C) below which the control unit 8 commands start-up of said heating device and/or a threshold temperature value (e.g. 37°C) above which the control unit 8 commands switching-off of said heating device may be determined. Similarly, a temperature threshold value of the water may be set such that, if the temperature sensor measures a water temperature exceeding this threshold, the control unit 8 commands activation of the water cooling device.

The plant 1 may further comprise a chlorine metering device 12.

The chlorine metering device 12 may be situated upstream of said at least one inlet skimmer 2b and downstream of said recirculation pump 3 and may be configured to introduce chlorine into the water of said basin 2, being operationally connected to said control unit 8.

The processing circuit of the control unit 8 may be configured to command switching-on of said device so that said device introduces chlorine into the water when said chlorine sensor detects, in the water, a chlorine level lower than a predefined threshold value (for example 0.4 mg/L).

The control unit 8 may command the start-up of a pump for supplying chemical substances, so as to introduce the correct amount of chlorine from the chlorine metering device 12 in order to keep the level of chlorine dissolved in the water within a predefined range about an optimum value, for example between 0.6 and 1.5 mg/L. The metering device is preferably a pump for solid-state chlorine, for example in the form of pellets or granules. As an alternative to chlorine, said metering device may be configured to introduce into the water bromine, preferably in the form of pellets or granules.

The plant 1 may also comprise a pH adjustment device 11, said device comprising an acid metering device 11a configured to introduce acid into the water of said basin 2 and/or a base metering device 11b configured to introduce a base into the water of said basin 2.

The pH adjustment device 11 may be operationally connected to said control unit 8. Said control unit 8 may operate the pH adjustment device 11 so that it:
- introduces a base into the water when said pH sensor 11 detects, in the water, a pH level lower than a predefined threshold value, for example pH < 4.5, or
- introduces into the water an acid when said pH sensor detects a pH level higher than a predefined threshold value, for example pH > 8.5.

The control unit 8 may command the start-up of a pump supplying chemical substances, so as to introduce the correct amount of acid or base from the metering devices 11a, 11b, so as to keep the pH of the water within a predefined optimum range, for example a pH value of between 4.5 and 8.5.

The pH adjustment device 11 is preferably situated upstream of said at least one inlet skimmer 2b and downstream of the recirculation pump 3. The processing circuit of the control unit 8 may be configured so as to set different predefined threshold levels for the pH of the water depending on the preferences of an operator or the starting quality of the water used.

The acids and the bases which can be used by the pH adjustment device 11 may comprise any substance known per se, commonly used to increase and reduce the pH of the water of a swimming pool, such as, for example, hydrogen sulphide, hydrochloric acid, sodium hydrogen sulphate or other acids and weak bases used in the present state of the art. The acid and base metering devices are preferably pumps 11a,11b, respectively, where the acid and the base are introduced into the water in the solid state, for example in the form of pellets or granules.

Although the present invention has been described and illustrated in relation to preferred embodiments, it must be understood that numerous variations of these embodiments may be provided without departing from the scope of protection of the present invention, which is defined by the accompanying claims.

## Claims

1. A water purification plant (1) connectable to a basin (2) of a swimming pool in order to purify its water, said basin (2) comprising at least one outlet skimmer (2a) for allowing the water to flow out from said basin and at least one water inlet skimmer (2b) for introducing the water into said basin, said plant comprising an intake line and a discharge line respectively connectable to said at least one outlet skimmer (2a) and to said at least one inlet skimmer (2b) so as to receive water from the basin (2) and introduce it back therein, said plant further comprising:
a. at least one recirculation pump (3), in fluid communication with said basin (2) and able to be operated with a variable regime, the pump (3) being located between said at least one outlet skimmer (2a) and said at least one inlet skimmer (2b) for the water, the pump being operated by a motor (3a) controlled by an inverter (3b);
b. for each recirculation pump (3) at least one pre-filter (4), installed upstream of said respective pump and comprising a pre-filter tank (4a) and a pre-filter lid (4b), said pre-filter lid (4b) being configured to allow the insertion of one or more sensors;
c. purification means (5) in fluid communication with said pump so as to purify said water, said purification means (5) being located downstream of said recirculation pump and upstream of said at least one inlet skimmer (2b);
d. monitoring means (6) suitable for detecting chemical and/or physical parameters of water flowing in said plant, said monitoring means (6) comprising at least one water turbidity sensor (7);
e. a control unit (8) functionally connected to said recirculation pump (3), in order to regulate an actuation and operating regime thereof, and to said monitoring means (6), in order to receive data therefrom;
wherein said at least one turbidity sensor is installed inside said pre-filter tank (4a) through said pre-filter lid (4b) and wherein said control unit (8) is configured to vary an actuation and operating regime of said pump (3) depending on said parameter values, which comprise a water turbidity value measured by said at least one turbidity sensor (7).

2. Water purification plant according to claim 1, comprising, for each recirculation pump (3), at least two pre-filters (4), installed parallel with each other upstream of said respective recirculation pump (3), wherein at least one turbidity sensor (7) is installed inside said pre-filter tank (4a) through said pre-filter lid (4b) of each of said pre-filters (4) and wherein the control unit (8) is configured to vary an operating regime of said recirculation pump (3) depending on the turbidity values of the water measured by each of said turbidity sensors (7).

3. Water purification plant according to one of the preceding claims, comprising at least one balancing tank (9), in fluid communication with said recirculation pump (3) and located downstream of said at least one outlet skimmer (2a) and upstream of said recirculation pump (3), and at least one further turbidity sensor (7) inserted in said at least one balancing tank (9), wherein the control unit (8) is configured to vary an operating regime of said recirculation pump (3) depending on the turbidity values of the water measured by each of said turbidity sensors (7).

4. Water purification plant according to one of the preceding claims, wherein said monitoring means (6) comprise at least one of the following:
a. pH sensor;
b. water temperature sensor;
c. water hardness sensor;
d. water pressure sensor;
e. a person-counting optical sensor, configured to determine the number of bathers in said basin;
f. sensor for checking the percentage of oxygen in the water;
g. colorimetric sensor for the water;
h. chlorine sensor configured to measure the amount of chlorine present in the water;
i) cyanuric acid sensor;
wherein at least one of said sensors is inserted in said pre-filter tank (4a) or in said balancing tank (9).

5. Water purification plant according to claim 4, wherein the plant comprises a water heat exchange device (10), said device (10) being located upstream of said at least one inlet skimmer (2b) and downstream of said purification means (5) and being functionally connected to said control unit (8).

6. Water purification plant according to claim 4, wherein said plant comprises a pH adjustment device (11), said device (11) comprising:
- an acid metering device (11a) configured to introduce acid into the water of said basin; and
- a base dosing device (11b) configured to introduce a base into the water of said basin,
the pH adjustment device (11) being functionally connected to said control unit (8), wherein said control unit commands the switching-on of said device (11) so that it introduces an acid into the water when said pH sensor detects a pH level above a predefined threshold value, and so that it inputs a base when said pH sensor detects a pH level below a predefined threshold value, said pH adjustment device (11) being located upstream of said at least one inlet skimmer (2b) and downstream of said recirculation pump (3).

7. Water purification plant according to claim 4, wherein said plant comprises a chlorine metering device (12), said chlorine metering device (12) being configured to introduce chlorine into the water of said basin and being functionally connected to said control unit (8), wherein said control unit (8) commands the switching-on of said device (12) so that it introduces chlorine into the water when said chlorine sensor detects a chlorine level lower than a predefined threshold value, said chlorine metering device (12) being located upstream of said at least one inlet skimmer (2b) and downstream of said recirculation pump (3).

8. Water purification plant according to one of the preceding claims, wherein said control unit (8) comprises:
a. a memory device
b. a receiver connected to the memory device, which allows data to be received from one or more of said monitoring means (6); and
c. a processing circuit connected to the memory device and the receiver, the processing circuit being configured to:
I. receive a measurement of the turbidity of the water from said at least one turbidity sensor (7);
II. determine an optimal fluid flow rate and filtering time for obtaining a desired turbidity level for the water in the basin (2) of said swimming pool by comparing a measured turbidity value of the water with a predefined desired turbidity value; and
III. operate said motor (3a), by means of said inverter (3b), so as to operate said pump (3b) at the optimum speed and time for filtering of the water.

9. Water purification plant according to one of the preceding claims, wherein said purification means (5) comprise at least one sand filter.

10. Water purification plant according to one of the preceding claims, wherein said at least one turbidity sensor (7) comprises a nephelometric optical probe.

11. Method for controlling a water purification plant according to claim 1, the method comprising the steps of:
a. detecting the turbidity of the water using at least one turbidity sensor (7);
b. if the turbidity value of the water is higher than J, starting the motor (3a) of said recirculation pump (3) at a speed X;
c. if the turbidity value of the water is higher than K, where K is greater than J, raising the speed of the motor (3a) of said recirculation pump (3) to Y rpm, wherein Y is greater than X
d. continuing to monitor said water turbidity level and, if the turbidity level measured is between J and K, reducing the speed of the motor (3a) of the recirculation pump (3) to X and, if the turbidity level measured is less than J, switching off the motor (3a) of the recirculation pump (3),
wherein J and K are water turbidity values measured in mg/L of SiO₂ and
wherein X and Y are speed values of said motor (3a), measured in rpm.
